# EUROPÄISCHE PATENTSCHRIFT

(11) **EP 0 483 558 B1**
(45) Veröffentlichungstag und Bekanntmachung des Hinweises auf die Patenterteilung: **12.06.1996**
(21) Anmeldenummer: 91117153.6
(22) Anmeldetag: 08.10.1991
(51) Int. Cl.: H04M 1/03

(54) **Halterung für einen elektroakustischen Wandler innerhalb eines Handapparates**
Mounting of an electroacoustic transducer in a telephone handset
Fixation pour un transducteur électroacoustique dans un combiné téléphonique

(30) Priorität: 30.10.1990 DE 9014980 U
(43) Veröffentlichungstag der Anmeldung: 06.05.1992
(73) Patentinhaber: SIEMENS AKTIENGESELLSCHAFT, D-80333 München (DE)
(72) Erfinder: Benning, Johannes, Dipl.-Ing., W-4280 Borken (DE); Reuschel, Jürgen, W-4290 Bocholt-Lowick (DE)

(56) Entgegenhaltungen:
- DE-A- 2 309 978
- DE-A- 2 440 841
- DE-A- 2 440 899
- DE-A- 3 609 490
- DE-U- 8 810 891
- DE-U- 9 014 980
- GB-A- 2 225 192

## Beschreibung

Die vorliegende Erfindung beinhaltet eine Halterung für einen elektroakustischen Wandler in einem aus Ober- und Unterteil bestehenden Handapparatekörper, wobei die Halterung aus einem elastischen Material besteht und mit einem zylindrischen Bereich den Wandler zumindest auf einem Teil seiner Mantelfläche umschließt und der Wandler im Hör- oder Einsprachebereich des Unterteils angeordnet ist.

Neuere Handapparate bestehen zumeist aus zwei Halbschalen, die miteinander z. B. durch Schrauben oder mittels Rastelemente verbunden werden. Bei dem heutigen Trend, die Handapparate gewichtsmäßig immer leichter zu gestalten, tritt jedoch das Problem auf, daß sich schon bei geringfügigem Druck auf den Handapparat die Schalen gegeneinander bewegen und somit Knackgeräusche erzeugt werden. Ebensolche Geräusche werden durch Schwenken der Handapparateschnur erzeugt und auf den Handapparatekörper übertragen. Die heutzutage verwendeten elektroakustischen Wandler, insbesondere das Piezomikrofon sind bezüglich ihrer Übertragungseigenschaften sehr empfindlich, so daß die Knackgeräusche an den Gesprächspartner weitergegeben werden.

Um diese Nachteile zu vermeiden, ist es bereits bekannt, den Wandler elastisch und von den Wänden des Handapparates beabstandet zu lagern. Dabei werden die Wandler in topfförmige, aus elastischem Material vorzugsweise Gummi bestehende Halterungen eingebracht, von denen sie formschlüssig umgriffen und somit gehaltert werden. Die Halterung selbst besitzt mehrere radial verlaufende elastische Stege, die an ihren freien Enden Anschläge aufweisen. Die Stege werden zur Festlegung des Wandlers in im Handapparateinneren angeordnete Aufnahmen eingedrückt.

Durch die DE-U-8810891 sind aus verformbaren Material bestehende Befestigungsteile für elektroakustische Wandler in Handapparaten von Fernsprechendgeräten bekannt, die aus einem äußeren Haltering und einem inneren Befestigungsring gebildet werden. Diese Befestigungsteile umgreifen den Wandler in der Weise, daß der äußere Haltering vom Gehäuseunterteil und der innere Befestigungsring vom Gehäuseoberteil fixiert wird, wobei eine elastische Verformung der Befestigungsteile im zusammengebauten Zustand des Handapparates erfolgt. Dabei können der äußere Haltering und der innere Befestigungsring über einen flexiblen Verbindungssteg einstückig miteinander verbunden sein.

Bei dieser Ausführungsform werden zwei dem Wandler an sich gegenüberliegenden Flächen umfassende Teile benötigt, die separat am Wandler angebracht werden müssen. Gerade bei Massenprodukten ist man bestrebt, die Anzahl der Arbeitsschritte bei der Herstellung des Produktes zu reduzieren, um somit die Herstellungskosten zu senken.

Der vorliegenden Erfindung liegt daher die Aufgabe zugrunde, die zuvor angeführte Halterung in der Weise zu vereinfachen, daß beim Zusammenbau des Handapparates eine sichere Festlegung des Wandlers und dessen elastische Halterung innerhalb des Handapparatekörpers erreicht wird.

Diese Aufgabe wird dadurch gelöst, daß die Halterung zusätzlich aus einem einstückig in Form eines Außenflansches mit dem zylindrischen Bereich verbundenen ebenen Bereich besteht, wobei der ebene Bereich der Halterung direkt mittels am Oberteil des Handapparatekörpers angeordneter Stege unter Vorspannung an den die Schalldurchlaßöffnungen aufweisenden Bereich des Unterteils angedrückt wird.

Durch eine derartige Gestaltung der Halterung wird beim Zusammenbau von Ober- und Unterteil des Handapparates durch die am Oberteil angeordneten Stege der ebene und in Form eines Außenflansches ausgebildete Bereich der Halterung akustisch dicht an den die Schalldurchlaßöffnungen aufweisenden Bereich des Unterteils gepreßt. Somit wird in nur einem Arbeitsgang die gewünschte elastische Lagerung des elektroakustischen Wandlers erreicht.

Zum Ausgleich von Toleranzen kann der zylindrische Bereich der Halterung mit dem ebenen Bereich über eine Einschnürung verbunden sein. Dabei kann weiterhin zur formschlüssigen Umfassung des betreffenden, stufenförmig abgesetzten Wandlers eine dieser Kontur des Wandlers angepaßte und im Innenraum der Halterung angeordnete umlaufende Wulst vorgesehen sein.

Eine zusätzliche Führung der Halterung beim Einlegen des mit der Halterung versehenen Wandlers kann dadurch erreicht werden, daß an der Halterung in deren ebenen Bereich Einschnitte vorgesehen sind, in die am Unterteil angeordnete Rippen eingreifen. Ferner kann die Halterung in ihrem dem die Schalldurchlaßöffnungen aufweisenden Bereich zugewandten ebenen Bereich in seinen Ecken Auflagen sowie einen im Randbereich umlaufenden Ansatz besitzen, durch die die akustisch dichte Anlage erzielt wird.

Die Erfindung soll im folgenden anhand eines Ausführungsbeispiels näher erläutert werden.

Es zeigt
Figur 1 die Halterung für einen elektroakustischen Wandler in einer perspektivischen Ansicht,
Figur 2 die Halterung in einer Aufsicht von oben,
Figur 3 die Halterung in einer geschnittenen Seitenansicht,
Figur 4 einen aus Ober- und Unterteil bestehenden Handapparatekörper mit eingebauten elektroakustischen Wandlern in einer geschnittenen Seitenansicht,
Figur 5 das Oberteil des Handapparatekörpers in einer geschnittenen Seitenansicht.

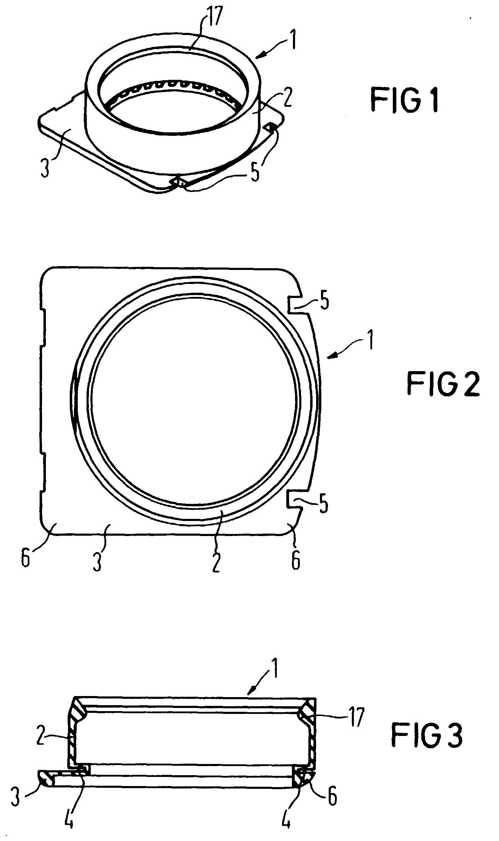

Die in den Figuren 1 bis 3 dargestellte und aus einem elastischen Material, vorzugsweise einem Elastomer bestehende Halterung 1 für die Befestigung eines elektroakustischen Wandlers innerhalb eines Handapparatekörpers weist einen zylindrischen Bereich 2 und einen einstückig mit diesem verbundenen ebenen und der Befestigung des Wandlers innerhalb des Handapparates dienenden Bereich 3 auf, wobei der Bereich 3 den Konturen des Einsprachebereiches vom Handapparat angepaßt ist. Der zylindrische sowie der ebene Bereich 2 und 3 sind über eine Einschnürung 4 auf den größten Teil des Umfangs des Zylinders miteinander verbunden, um eine akustisch dichte und elastische Verbindung beim Einbau des Wandlers in den Handapparatekörper sicherzustellen. Der ebene Bereich 3 weist zwei Einschnitte 5 auf, in die zwei an dem Unterteil des Handapparatekörpers angeordnete, nicht näher bezeichnete Rippen zur Montageerleichterung und Lagesicherung eingreifen. Die Halterung weist ferner in ihrem ebenen Bereich in ihren Ecken Auflagen 6 auf.

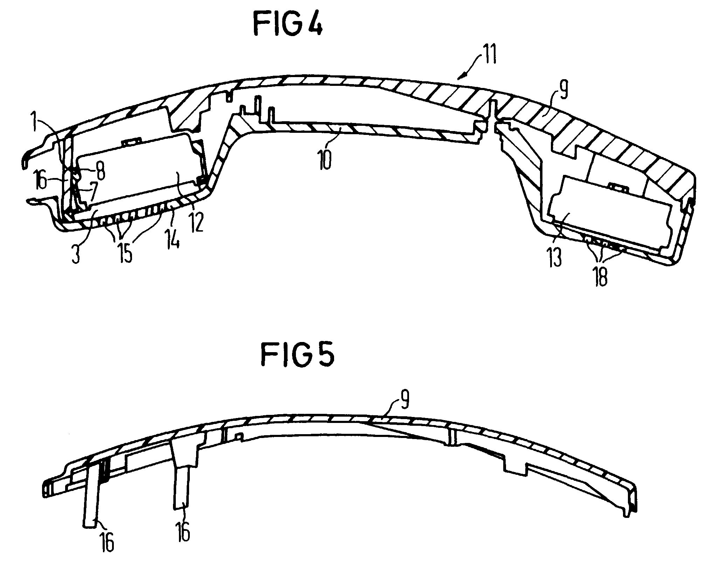

Der zylindrische Bereich 2 der Halterung ist der zylindrischen Mantelfläche des elektroakustischen Wandlers angepaßt und liegt in diesem Bereich eng an dem Wandler an. Wie aus Figur 4 zu ersehen ist, ist die zylindrische Mantelfläche 7 des Wandlers 12 stufenförmig in dem Bereich 8 abgesetzt. Zur Anpassung der Halterung 1 an diesen stufenförmig reduzierten Bereich weist die Halterung 1 eine in den Innenraum des zylinderförmigen Bereiches weisende umlaufende Wulst 17 auf.

Der in der Figur 4 dargestellte und aus dem Oberteil 9 und dem Unterteil 10 bestehende Handapparatekörper 11 dient zur Aufnahme von zwei elektroakustischen Wandlern 12 und 13. In dem vorliegenden Ausführungsbeispiel ist mit 12 der der Einsprache dienende und mit 13 der dem Hören dienende elektroakustische Wandler bezeichnet. Beide elektroakustischen Wandler 12 und 13 sind baugleich. Wie aus Figur 4 zu ersehen ist, umschließt die Halterung 1 den elektroakustischen Wandler 12 auf dem größten Teil seiner zylindrischen Mantelfläche. Der ebene Bereich 3 ist dabei den inneren Konturen des Einsprachebereiches 14 des Unterteils 10 des Handapparatekörpers 11 angepaßt und liegt somit dicht an den Schalldurchlaßöffnungen 15 des Unterteils 10 an. Eine akustisch dichte Verbindung zwischen dem Wandler 12 und den Schalldurchlaßöffnungen 15 wird durch die vier Stege 16 (Figur 5) am Oberteil 9 des Handapparatekörpers erzielt, die im zusammengebauten Zustand des Handapparates auf dem ebenen Bereich 3 der Halterung 1 unter leichter Vorspannung zur Anlage gelangen.

Im Bereich der Hörerseite sind mit der Ziffer 18 die Schalldurchlaßöffnungen bezeichnet. Dabei kann das Oberteil 9 mit dem Unterteil 10 des Handapparatekörpers 11 durch eine Rastverbindung zusammengefügt sein. Eine anschließende Sicherung von Ober- und Unterteil 9 und 10 kann durch eine Verschraubung erfolgen.

## Patentansprüche

1. Halterung (1) für einen elektroakustischen Wandler (12) in einem aus Ober- und Unterteil (9, 10) bestehenden Handapparatekörper (11), wobei die Halterung (1) aus einem elastischen Material besteht und mit einem zylindrischen Bereich den Wandler (12) zumindest auf einem Teil seiner Mantelfläche umschließt und der Wandler (12) im Hör- oder Einsprachebereich (14) des Unterteils (10) angeordnet ist, **dadurch gekennzeichnet**, daß die Halterung (1) zusätzlich aus einem einstückig in Form eines Außenflansches mit dem zylindrischen Bereich (2) verbundenen ebenen Bereich (3) besteht, wobei der ebene Bereich (3) der Halterung (1) direkt mittels am Oberteil des Handapparatekörpers (11) angeordneter Stege (16) unter Vorspannung an den die Schalldurchlaßöffnungen (15) aufweisenden Bereich des Unterteils (10) angedrückt wird.

2. Halterung nach Anspruch 1, **dadurch gekennzeichnet**, daß der zylindrische und der ebene Bereich (2, 3) über eine Einschnürung (4) verbunden sind.

3. Halterung nach Anspruch 1, **dadurch gekennzeichnet**, daß im Innenraum des zylindrischen Bereiches (2) eine umlaufende, dem stufenförmig abgesetzten Bereich des Wandlers (12) angepaßte Wulst (17) angeordnet ist.

4. Halterung nach Anspruch 1, **dadurch gekennzeichnet**, daß der ebene Bereich (3) der Halterung (1) Einschnitte (5) aufweist, in die Rippen am Unterteil (10) des Handapparatekörpers (11) eingreifen.

5. Halterung nach Anspruch 1, **dadurch gekennzeichnet**, daß der ebene Bereich (3) der Halterung (1) in seinem den Schalldurchlaßöffnungen (15) des Handapparatekörpers (11) zugewandten Bereich Auflagen (6) aufweist.

## Claims

1. Mount (1) for an electroacoustic transducer (12) in a handset body (11) comprising an upper part (9) and lower part (10), the mount (1) consisting of an elastic material and enclosing, with a cylindrical region, the transducer (12) at least over part of the curved surface thereof, and the transducer (12) being arranged in the listening or receiving region (14) of the lower part (10), characterized in that the mount (1) additionally comprises a planar region (3) which is integrally connected to the cylindrical region (2) in the form of an external flange, the planar region (3) of the mount (1) being pressed directly, by means of webs (16) arranged on the top part of the handset body (11), with prestress against that region of the lower part (10) which has the sound passage openings (15).

2. Mount according to Claim 1, characterized in that the cylindrical region (2) and the planar region (3) are connected via a constriction (4).

3. Mount according to Claim 1, characterized in that a circumferential bead (17) matched to that region of the transducer (12) which has a stepped offset is arranged in the interior of the cylindrical region (2).

4. Mount according to Claim 1, characterized in that the planar region (3) of the mount (1) has incisions (5) into which ribs on the lower part (10) of the handset body (11) engage.

5. Mount according to Claim 1, characterized in that the planar region (3) of the mount (1) has supports (6) in its region facing the sound passage openings (15) of the handset body (11).

## Revendications

1. Fixation (1) d'un transducteur (12) électroacoustique dans un corps (11) de combiné téléphonique constitué d'une partie supérieure et d'une partie intérieure (9,10), la fixation (1) étant en un matériau élastique et entourant, par une zone cylindrique, le transducteur (12) au moins sur une partie de sa surface latérale et le transducteur (12) étant disposé dans la zone d'écoute ou de parole (14) de la partie (10) inférieure, caractérisée en ce que la fixation (1) est constituée, en plus, d'une zone (3) plane, d'une seule pièce, court forme d'une collerette extérieure, et reliée a la zone (2) cylindrique, la zone plane (3) de la fixation (1) étant appuyée directement au moyen de barrettes (16) montées dans la partie supérieure du corps (11) de combiné téléphonique avec précontrainte sur la zone de la partie inférieure (10) comportant les ouvertures (15) laissant passer le son.

2. Fixation suivant la revendication 1, caractérisée en ce que les zones cylindrique et plane sont reliées par l'intermédiaire d'un étranglement (4).

3. Fixation suivant la revendication 1, caractérisée en ce qu'un bourrelet (17) circulaire, adapté à la zone en retrait et en gradin du transducteur (12) est prévu à l'intérieur de la zone cylindrique (2).

4. Fixation suivant la revendication 1, caractérisée en ce que la zone plane (3) de la fixation (1) comporte des encoches (5), dans lesquelles des nervures de la partie inférieure (10) du corps (11) de combiné téléphonique s'engagent.

5. Fixation suivant la revendication 1, caractérisée en ce que la zone plane (3) de la fixation (1) comporte des supports (6) dans sa zone tournée vers les ouvertures (15) laissant passer le son du corps (11) de combiné téléphonique.
